# EUROPEAN PATENT APPLICATION

(11) **EP 2 453 233 A1**
(43) Date of publication of application: **16.05.2012**
(21) Application number: 10191353.1
(22) Date of filing: 16.11.2010
(51) Int. Cl.: G01N 33/487, G01N 21/51, G01N 21/90, G01N 35/10

(54) **Method and apparatus for detecting foam on a liquid surface in a vessel**

(71) Applicant: Roche Diagnostics GmbH, 68305 Mannheim (DE); F. Hoffmann-La Roche AG, 4070 Basel (CH)
(72) Inventor: Schiller, Claudia, 82131 Gauting (DE); Franz, Tobias, 81377 München (DE); Gutekunst, Martin, 82390 Eberfing (DE); Polland, Hans-Joachim, 82515 Wolfratshausen (DE)
(74) Representative: Tiesmeyer, Johannes

(57) **Abstract**

The invention concerns a method for detecting foam on a liquid surface (14) in a vessel (10), comprising the steps:
- a) providing a vessel (10), particularly a tube-shaped vessel, which has an upper opening (12) surrounded by a border and which includes an amount of a liquid,
- b) taking at least one image of the liquid surface (14) from the top of the vessel (10) through the opening (12) of the vessel (10) by using an image sensing device (20) providing corresponding image data,
- c) performing an automatic evaluation of said image on the basis of said image data by means of a data processing system (30) using an image evaluation program that is adapted to identify foam specific areas in the image and to provide information about the presence or absence of foam specific areas in the image as a result of the image evaluation.

Subject of the invention is also an apparatus for performing the method.

## Description

The present invention relates to a method and an apparatus for detecting foam on a liquid surface in a vessel. The term vessel denominates a container, e.g. a tube, a bottle, a cup etc. Such systems for detecting foam on a liquid surface in a vessel are particularly useful in the field of automatic analysers which comprise pipetting systems for the exchange of predetermined amounts of liquid between vessels or containers which are automatically handled in such automatic analyser systems. The pipetting of a liquid sample or an analyte from a respective vessel is carried out by means of a pipette which is slightly immerged with its pipette tip into the liquid, and a predefined volume of the liquid is sucked into the pipette. If there is a foam layer on the liquid it might happen that the end position of the tip of the pipette is inside the foam layer, and thus a considerable amount of foam will be sucked into the pipette during the pipetting period. This can lead to a wrong analytical result of the automatic analyser.

Since the filling level of the liquid generally changes from vessel to vessel, technical solutions have been already developed to detect the liquid surface level. Systems for detecting the liquid surface level are disclosed for example in EP 1 562 027 A1 and WO 2000/42384 A1. According to EP 1 562 027 A1 collimated light is directed to the surface of the liquid. The preferred incident angle is between 10° and 20°. A semiconductor photo sensor is used as a CCD-photo detector which is directed to the surface of the liquid. Scanning of the incident angle or movement of the complete detection system can give more information about the liquid surface. Air bubbles can be detected by the disturbance of reflectance. The optical detection system can be combined with a capacitance measurement for liquid level detection. The system described in WO 2000/42384 A1 operates in a similar manner as the system of EP 1 562 027 A1. Both said systems of the prior art do not involve image acquisition and image processing for determining the extension of the foam.

US 5,414,778 A is directed to a dynamic fluid level and bubble inspection for quality and process control and relates to fast image processing for the detection of bubbles in a liquid and gives information on algorithms to characterize the bubbles. However, foam on the surface is not considered and images are taken in transmission and not from the top of the vessel. In a similar manner operates the system according to WO 2005/03758 A1. Images of foam are taken through the vascular wall of the vessel. There is no description for taking images from the top of the vessel.

It is further known to detect foam on liquid surfaces by means of pressure sensors, e.g. attached to the tips of pipettes for pipetting liquid from the vessel.

The known systems of the prior art for detecting foam are not capable of providing specific results of foam distribution on the liquid surface in the vessel.

It is an object of the present invention to provide a method for detecting foam on a liquid surface in a vessel, which can be implemented in an automated liquid pipetting system and which can be executed to automatically distinguish between foam areas and non-foam areas on the liquid surface in a sensitive manner in order to provide information as a basis for the decision whether the vessel is prepared for pipetting liquid therefrom.

A further object of the present invention is to provide an apparatus for carrying out the method of the present invention.

In order to achieve the above object the method according to the present invention comprises the steps:
- a) providing a vessel, particularly a tube-shaped vessel, which has an upper opening surrounded by a border and which includes an amount of a liquid,
- b) taking at least one image of the liquid surface from the top of the vessel through the opening of the vessel by using an image sensing device providing corresponding image data,
- c) performing an automatic evaluation of said image on the basis of said image data by means of a data processing system using an image evaluation program that is adapted to identify foam specific areas in the image and to provide information about the presence or absence of foam specific areas in the image as a result of the image evaluation.

According to the method of the present invention at least one image of the liquid surface is taken from the top of the vessel through the opening of the vessel. The observation direction of the image sensing device corresponds substantially to the direction in which a pipette has to be moved with its tip into the respective vessel when liquid is to be pipetted from said vessel. In other words, the image sensing device is directed to the target area of such a pipette tip and the surrounding of that target area, and this is an optimal view direction for taking an image of the foam distribution on the liquid surface in the vessel. The image sensing device is preferably a camera with a CCD-sensor chip or a CMOS-sensor chip which provides coloured or grayscale images. It may be sufficient to take merely one image of a liquid surface in a particular vessel and to perform the automatic evaluation of said image in order to identify foam areas. The image sensing device may be alternatively operated in a continuous video mode or in a serial mode to provide a series of corresponding images of a liquid surface, wherein the data of corresponding image pixels are averaged to provide a respective mean value of each pixel for further data processing.

The automatic evaluation of said image is performed by processing the image data by means of a data processing system which operates with an image evaluation program that is adapted to identify foam specific areas in the image and to provide information about the presence or absence of foam specific areas in the image as a result of the image evaluation. In particular, the automatic evaluation of the image may provide results of the distribution of foam on the liquid surface in the respective vessel so that a decision can be made whether a sufficient large central region, e.g. a target region for pipetting is substantially free of foam. If such a target region of the liquid surface is free of foam, pipetting may be performed regardless of any foam outside that region.

The image processing or image evaluation (step c) includes preferably three main steps, namely:
- grabbing the image,
- identifying the vessel or a specific vessel feature, e.g. the border of the upper opening of the vessel,
- identification or characterisation of the foam, if present.

There are many conventional image evaluation algorithms the person skilled in the art may choose for identifying typical contours and structures of expected vessel features, foam and non-foam areas in the image. Those image evaluation algorithms may include an algorithm for calculation of a radial image with the image points or pixels are assigned to radial coordinates or polar coordinates. If such a radial image is calculated a best fit calculation of the vessel opening boarder may be easily performed to a curve which is close to a sine and/or cosine curve, particularly if the border is a circle. After the border is identified, it is easy to identify the centre of the liquid surface and a central target region as seen from above through the opening of the vessel.

For characterisation of the foam, preferably an operator for the detection of edges is applied to at least a part of the image data or to corresponding data derived therefrom, particularly in order to detect borders of foam specific areas in the image. According to the present invention the well-known Sobel-operator as operator for the detection of edges is preferably used. Further, histogram calculation algorithms may be applied for identifying foam specific areas on the liquid surface.

In order to achieve a good quality of the image, the liquid surface should be illuminated preferably from the top of the vessel and the image should be taken through a polarizer in order to suppress light which is reflected directly from the liquid surface. The illumination light is preferably linearly polarized, wherein the polarizer, through which the image is taken, is adapted to transmit light that is polarized perpendicular with regard to the polarisation direction of the illumination light.

Subject of the present invention is further an apparatus for detecting foam on a liquid surface in a vessel having an upper opening surrounded by a border and including an amount of a liquid. The apparatus of the invention comprises
- a holder adapted for positioning a respective liquid containing vessel with its opening at the top at a predetermined location,
- an illumination device adapted for illuminating the liquid surface in the vessel when the vessel is positioned at the predetermined location,
- an image sensing device adapted for taking at least one image of the liquid surface from the top of the vessel through the opening of the vessel when the vessel is positioned at the predetermined location and for providing corresponding image data,
- a data processing system adapted for performing an automatic evaluation of said image on the basis of said image data and using an image evaluation program that is adapted to identify foam specific areas in the image and to provide information about the presence or absence of foam specific areas in the image as a result of the image evaluation.

The apparatus according to the present invention is preferably adapted to automatically performing the above explained method of the present invention.

The holder for positioning the vessel with its opening at the top at the predetermined location may be a moveable vessel holder of an automatic analyser. An example for such a moveable vessel holder is a turntable with receptacles for a lot of vessels which can be positioned at predetermined locations by rotating the turntable accordingly.

The illumination device may comprise any type of an adequate light source like LED, light bulb, super luminescence diodes (SLD), laser, arc lamp or a strobe. The wave length of the light emitted by the source can be optimized to the absorption and/or reflection properties of the liquid to be observed. In a preferred embodiment of the apparatus the illumination device has a typical wavelength between 400 nm and 700 nm, and it is not excluded to use UV-light or infra red light, if applicable.

The image sensing device may include a CCD-camera or CMOS-camera for taking the images and for providing corresponding image data for the data processing system. The data processing system is preferably a personal computer or the like.

According to a preferred embodiment of the apparatus the illumination device includes at least one light source which illuminates the liquid surface in the vessel either directly or indirectly via a reflecting device from above. Such a reflecting device can be a mirror or a beam splitter, in particular a polarizing beam splitter. In order to achieve a good imaging of the liquid surface at least one optical imaging lens should be arranged in front of the image sensing device, wherein an iris is positioned in front of the lens in order to achieve a relatively great depth of focus. The iris aperture may be for example 1 mm.

Preferably a polarizing filter is arranged in the illuminating optical path between the light source and the vessel, and also a polarizing filter is arranged in the imaging optical path between the vessel and the image sensing device, wherein the direction of polarisation of the polarizing filter in the illuminating optical path is perpendicular to the direction of polarisation of the polarizing filter arranged in the imaging optical path. This arrangement of polarizing filters is used to suppress light which is directly reflected from the liquid surface. Alternatively a polarizing beam splitter may be used instead of two polarizing filters.

The apparatus according to the invention is preferably a part of an automatic liquid pipetting system which comprises at least one pipetting means that is operable between said image sensing device and the vessel to suck liquid from the vessel. The automatic liquid pipetting system has a control means communicating with said data processing system, wherein said control means is adapted to control the pipetting means in dependence of information provided by said data processing system about the presence or absence of foam specific areas in the respective vessel.

In an alternative embodiment the apparatus according to the invention is part of an automatic liquid pipetting system which comprises at least one pipetting means, wherein said image sensor device is attached to said pipetting means or to a moveable holder of said pipetting means.

Preferred embodiments of the invention will be explained with reference to the drawings.
- Figs. 1-5: show in schematic views different embodiments of an apparatus according to the present invention;
- Figs. 6a, 7a and 8a: show schematic diagrams of a tube-shaped vessel containing a liquid and partially foam, wherein a pipette dips into the vessel;
- Fig. 6b: shows a photograph of a liquid surface in a vessel with viewing direction from the top of the vessel into the vessel-opening, wherein the liquid surface is substantially free of foam in correspondence with the diagram of Fig. 6a;
- Fig. 7b: is a photograph of a vessel with the same viewing direction as in Fig. 6b, wherein the liquid surface is covered with a foam layer according to the diagram in Fig. 7a;
- Fig. 8b: shows a photograph of the tube-shaped vessel with the same viewing direction as Fig. 6b and 7b, wherein in Fig. 8b the liquid surface has a central region free of foam and a ring-shaped border region covered with foam according to the diagram of Fig. 8a.

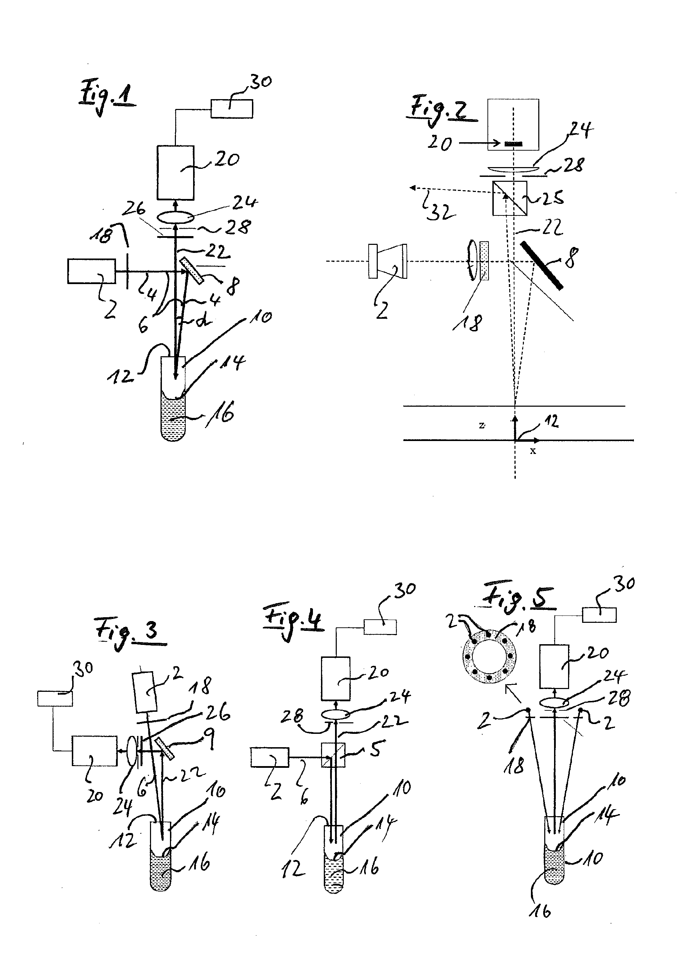

According to Fig. 1, the first embodiment of the apparatus comprises a light source 2 which emits a light beam 4 to a mirror 8 along a horizontal part of the illuminating optical path 6. The mirror reflects the light beam downwards under a small angle α with respect to the vertical direction. The reflected light beam enters a tube-shaped vessel 10 through the ring-shaped upper opening 12 thereof. The light beam 4 illuminates the surface 14 of a liquid 16 in the vessel 10. In the illuminating optical path 6 a polarizing filter 18 is inserted between the illumination device 2 and the mirror 8. The polarizing filter 18 linearly polarizes the light beam 4.

The illumination device 2 comprises at least one light emitting diode as a light source, but it is to be noted that other kinds of light sources are applicable. Vertically above the opening 12 of the vessel 10 an image sensing device 20 is arranged and directed to the vessel 10. In the imaging optical path 22, along which light scattered or reflected from the surface 14 and the surrounding border of the vessel 10 travels to the image sensing device 20, an optical imaging lens 24 is arranged in front of the image sensing device 20. In front of the imaging lens 24 a polarizing filter 26 is arranged in the imaging optical path 22. The direction of polarisation of the filter 26 is perpendicular to the direction of polarisation of the filter 18. In order to achieve a great depth of focus or sharpness an iris 28 is arranged in front of the imaging lens 24. The aperture of the iris 28 is preferably small in the order of 1 mm. A data processing system 30, preferably a PC, is connected to the image sensing device 20 for data transmission.

Not shown in the figures is a holder which positions the vessel 10 at the predetermined location beneath the image sensing device 20.

The image sensing device 20 is preferably a CCD-camera which provides grayscale information of images taken therewith, but it is not excluded to use an image sensing device 20 which also provides colour information to be evaluated.

It is not required that the resolution of the image sensing device 20 is extremely high. Good results were achieved with a resolution of 500 x 500 pixel of a sensor-chip of 4 mm x 4 mm. In one version of the apparatus shown in Fig. 1 an imaging lens 24 with a focal length of f = 35 mm was used together with an iris having an aperture of 1 mm. Since the numerical aperture of the optics is very small, the depth of sharpness for sufficient optical imaging extends at least over +/- 40 mm. Such a great range of the depth of focus or sharpness is important to account for different liquid levels leading to different distances between a respect liquid level 14 in a vessel 10 and the lens 24.

It is to be noted that different kinds and shapes of vessels may be employed for exposing a liquid surface to the image sensing device 20. Most preferred are tube-shaped vessels, e.g. standard-tube vessels as shown in the figures. The lengths and diameters of said vessels may differ. Good results were achieved with vessels having a diameter between approx. 5 mm and 20 mm and a length up to under 150 mm. Typical tubes to be used for the invention have a diameter of 13 mm and a length of 100 mm.

The distance between the imaging lens 24 and the highest possible liquid level of a vessel 10 at its predetermined location is approx. 220 mm and may increase when the liquid level in a vessel 10 is smaller. Such a relatively great distance allows to move pipetting means between the optical components of the apparatus and the vessel 10 in order to pipette liquid from the vessel 10.

Preferably the apparatus of the present invention is integrated in an automatic analyser, wherein the liquid 16 in the vessel 10 is a biological sample as human serum or haemolytic liquid. As a matter of fact also other liquids, e.g. analytes or the like may be employed.

Fig. 2 shows a second embodiment of the apparatus according to the present invention, which differs from the first embodiment in that a polarizing beam splitter 25 is inserted in the imaging optical path 22 instead of the polarizing filter 26.

Components in Figs. 2-5 which correspond to components in Fig. 1 are marked with the corresponding reference numbers. As to the explanation of those components reference is made to the above described first embodiment. A polarizing beam splitter 25 in the second embodiment acts with the polarizing filter 18 to suppress light which is directly reflected by the liquid surface. The polarizing beam splitter 25 further provides a second imaging beam 32 that may be passed to a second image sensing device (not shown) or to an other observing device.

The embodiment of Fig. 3 differs from the embodiment of Fig. 1 in that the position of the illumination device 2 and the position of the image sensing device 20 with the optical components 24, 28 have been exchanged so that in Fig. 3 the imaging optical path 22 is folded by the mirror 9 whereas the illuminating optical path 6 is straight.

The embodiment according to Fig. 4 differs from the embodiment of Fig. 1 in that a common polarizing beam splitter 5 is inserted in the illuminating optical path 6 and in the imaging optical path 22 whereas the polarizing filters 18, 26 are omitted in the embodiment of Fig. 4.

In the embodiment according to Fig. 5 light emitting diodes 2 as illumination devices are arranged equidistantly on a circle, and in front of them a polarizing ring 18 is provided in order to polarize the light emitted by the light diodes. All embodiments shown in the Figs. 1-5 are applicable to perform the method according to the present invention. The vessel 10 is positioned by the holder (not shown) at the predetermined location with its upper opening 12 exposed to the image sensing device 20 as shown Figs. 1-5. The illuminating light beam is directed to the surface 14 of the liquid 16 and the image sensing device 20 takes an image of the liquid surface from the top of the vessel 10. The image data, preferably pixel data with grayscale and/or colour information, are transmitted to the data processing system for performing an automatic evaluation of that image on the basis of said image data whereas an image evaluation program is used to identify foam specific areas in that image and to provide information about the presence or absence of foam specific areas in the image as a result of the image evaluation. The image evaluation program applies applicable image processing algorithms in order to identify the border of the upper opening 12 and/or an other feature of the vessel 10 so that the type of vessel 10 can be determined by the data processing system. It has be proven useful to apply an algorithm which performs a radial image calculation in order to assign the image data to radial coordinates or polar coordinates in cases of circular vessel openings 12. Then a best fit calculation of the vessel border to a sine and/or cosine curve is possible. From the theoretical curve to sine and/or cosine function the centre and radius of the vessel can be calculated and transferred to Cartesian coordinates. With the known radius of the vessel the image part with the liquid sample (inner part of the vessel) can be extracted. The application of an operator for the detection of edges, particularly the well-known Sobel-operator, to the image data or to corresponding data derived therefrom is proposed in order to detect borders of foam specific areas in the image. Further, histogram calculations may be performed for that purpose. The image evaluation process leads to information about the distribution of the foam on the liquid surface in the vessel 10, and that information can be processed for controlling the operation of an automated liquid pipetting system having a pipetting means for pipetting liquid from the vessel.

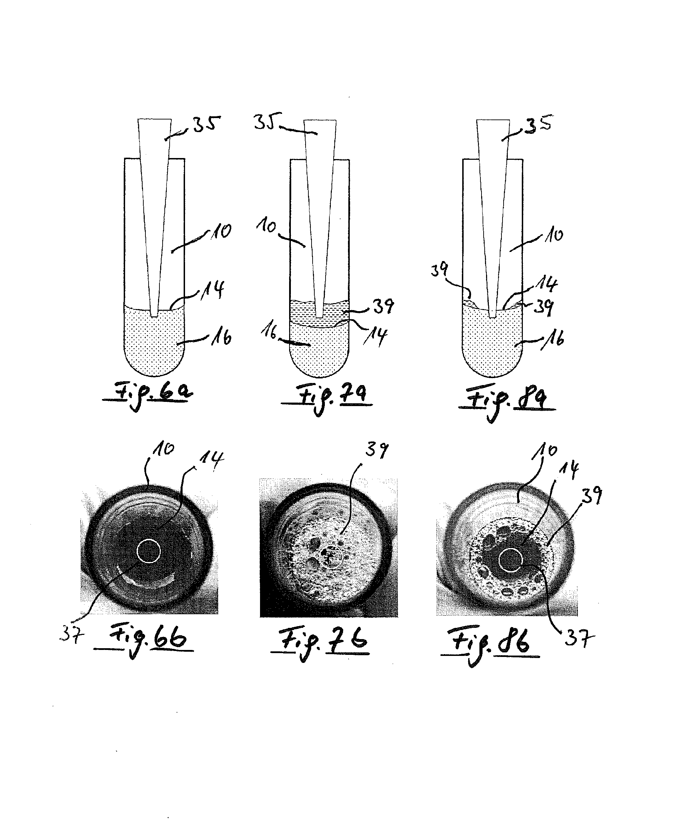

In the Figs. 6a, 7a, 8a and Fig. 6b, 7b and 8b three different situations of foam occurrence in the vessel 10 and the influence of foam occurrence on a pipetting process are illustrated.

In Fig. 6a the vessel is shown with a liquid 16 therein which has no foam on its upper surface 14. The pipette tip 35 slightly dips into the liquid 16 such that a pipetting process may be performed without failure. Fig. 6b corresponds to the situation illustrated in Fig. 6a and shows an image taken with an image sensing device 20. The white circle 37 was sketched in in order to mark a central target area for the pipette tip 35.

In Fig. 7a a relatively thick compact foam layer 39 rests on the liquid surface 14. The foam consists of a conglomerate of small bubbles with typical diameters between 0,2 mm and 5 mm. Also bigger bubbles can be included. The pipette tip 35 in its predetermined immersion depth ends in the foam layer 39. When performing the pipette process, only foam will be sucked in the pipette and the pipetting result is faulty. Fig. 7b is an image taken from the top of the vessel and shows the foam situation according to Fig. 7a.

Fig. 8a illustrates the situation where only an outer circular area of the liquid surface 14 is covered with foam 39 and the central region greater than the target region for the pipette tip 35 is free of foam. The tip 35 dips into the target region of the liquid 16 and the pipetting process to be performed therewith will provide correct results. The foam situation shown in Fig. 8b corresponds to that illustrated in Fig. 8a.

According to the present invention an automatic decision can be made by the data processing system 30 whether the target area 37 on the liquid surface 14 is free of foam or covered with foam. This decision can be used to automatically control a liquid pipetting system. In the case of Fig. 6a, 6b and 8a, 8b pipetting is allowed whereas in the case of Fig. 7a and 7b pipetting is not allowed.

It is to be noted that the method according to the invention may be performed before and after a pipetting step in order to monitor the pipetting process. In a further embodiment of the invention, the method can be perfomed continuously also during the pipetting step.

The immersion depth of the pipette tip may be controlled by conventional control means.

Various variants of the invention are possible. Illumination of the liquid surface may be performed by using optical fibres. The image sensing device may be adapted to provide information for a rough spectrum analysis of the sample in the vessel. According to a variant of the invention dark field images are taken and evaluated for foam detection.

Also direct images (without the use of polarizing filters) may be taken and evaluated.

## Claims

1. Method for detecting foam on a liquid surface (14) in a vessel (10), comprising the steps:
- a) providing a vessel (10), particularly a tube-shaped vessel, which has an upper opening (12) surrounded by a border and which includes an amount of a liquid,
- b) taking at least one image of the liquid surface (14) from the top of the vessel (10) through the opening (12) of the vessel (10) by using an image sensing device (20) providing corresponding image data,
- c) performing an automatic evaluation of said image on the basis of said image data by means of a data processing system (30) using an image evaluation program that is adapted to identify foam specific areas in the image and to provide information about the presence or absence of foam specific areas in the image as a result of the image evaluation.

2. Method according to claim 1, wherein in step b) the liquid surface is illuminated from the top of the vessel and the image is taken through a polarizing filter (26) in order to suppress light which is reflected directly from the liquid surface (14).

3. Method according to claim 2, wherein the illumination light is linearly polarized and wherein the polarizing filter (26), through which the image is taken, is adapted to transmit light that is polarized perpendicular with regard to the polarization direction of the illumination light.

4. Method according to one of the preceding claims, wherein in step b) a series of corresponding images of the liquid surface (14) is taken by using the image sensing device (20) and wherein the data of corresponding image pixels are averaged to provide a respective mean value of each pixel for further data processing in step c).

5. Method according to one of the preceding claims, wherein in step b) also the border of the vessel (10) is included in the image and wherein step c) includes detection of the border of the vessel (10) and detection of the centre of the opening by application of image evaluation algorithms.

6. Method according to claim 5, wherein a radial image is calculated in which the image points or pixels being assigned to radial coordinates or polar coordinates and wherein a best fit calculation of the vessel opening border is performed with a best fit to a curve which is close to a sine and/or cosine curve.

7. Method according to one of the preceding claims, wherein in step c) an operator for the detection of edges, particularly the Sobel-Operator, is applied to at least a part of the image data or to corresponding data derived therefrom, in order to detect borders of foam specific areas in the image.

8. Method according to one of the preceding claims, wherein step c) includes detection whether at least a predetermined central region of the image part surrounded by the border of the opening is substantially free of foam specific areas.

9. Apparatus for detecting foam on a liquid surface in a vessel having an upper opening (12) surrounded by a border and including an amount of a liquid
comprising:
- a holder adapted for positioning a respective liquid containing vessel (10) with its opening (12) at the top at a predetermined location,
- an illumination device (2) adapted for illuminating the liquid surface (14) in the vessel (10) when the vessel is positioned at the predetermined location,
- an image sensing device (20) adapted for taking at least one image of the liquid surface (14) from the top of the vessel (10) through the opening (12) of the vessel (10) when the vessel is positioned at the predetermined location and for providing corresponding image data,
- a data processing system (30) adapted for performing an automatic evaluation of said image on the basis of said image data and using an image evaluation program that is adapted to identify foam specific areas in the image and to provide information about the presence or absence of foam specific areas in the image as a result of the image evaluation.

10. Apparatus according to claim 9, wherein the illumination device (2) includes at least one light source and at least one reflecting device (8) for reflecting light of the light source such that the reflected light will enter the opening (12) of the vessel (10) to illuminate the liquid surface (14) in the vessel (10) from above.

11. Apparatus according to claim 9 or 10, wherein the at least one optical imaging lens (24) is arranged in front of the image sensing device (20) and wherein an iris (28) is positioned in front of the lens (24).

12. Apparatus according to one of the claims 9 to 11, wherein a polarizing filter (26) is arranged in the imaging optical path between the vessel (10) and the image sensing device (20).

13. Apparatus according to claim 12, wherein a polarizing filter (18) is arranged in the illuminating optical path (6) between the light source and the vessel (10), the direction of polarisation of that polarizing filter (18) is perpendicular to the direction of polarisation of the polarizing filter (26) arranged in the imaging optical path (22).

14. Apparatus according to one of the claims 9-13, wherein it is a part of an automatic liquid pipetting system which comprises at least one pipetting means that is operable between said image sensing device (20) and the vessel (10) at its predetermined location to suck liquid from the vessel (10).

15. Apparatus according to one of the claims 9-13, wherein it is a part of an automatic liquid pipetting system which comprises at least one pipetting means and wherein said image sensor device is attached to the pipetting means.

16. Apparatus according to claims 14 or 15, wherein the automatic liquid pipetting system has a control means communicating with said data processing system, said control means being adapted to control the pipetting means in dependence of information provided by said data processing system about the presence or absence of foam specific areas in the respective vessel.
